# EUROPÄISCHE PATENTANMELDUNG

(11) **EP 3 093 403 A2**
(43) Veröffentlichungstag der Anmeldung: **16.11.2016**
(21) Anmeldenummer: 16161583.6
(22) Anmeldetag: 20.02.2012
(51) Int. Cl.: E03D 5/10

(54) **ELEKTRONISCH GESTEUERTE UNTERPUTZ-WC-SPÜLARMATUR**

(30) Priorität: 10.03.2011 DE 102011013535
(62) Teilanmeldung aus: 12708096.8
(71) Anmelder: Schell GmbH & Co. KG, 57462 Olpe (DE)
(72) Erfinder: Weber, Hanno, 57581 Katzwinkel (DE); Sieberhagen, Günter, 58093 Hagen (DE)
(74) Vertreter: Patentanwälte Dörner & Kötter PartG mbB

(57) **Zusammenfassung**

Die Erfindung betrifft eine elektronisch gesteuerte Unterputz-WC-Spülarmatur mit einem Spülergehäuse (60, 160), einem darin angeordneten hydraulischen Selbstschlussventil (7) und einer Wandabdeckung (1, 101). Das Selbstschlussventil (7) besteht aus einem Ventilgehäuse (70, 170). In der Wandabdeckung (1, 101) ist ein Nottaster (2, 102) angeordnet. Das Spülergehäuse (60, 160) ist horizontal eingebaut. Das Selbstschlussventil (7) ist als Kartusche ausgebildet und weist eine Ventilspindel (85, 185) auf, die mit einer durchgehenden Spindelbohrung (86, 186) versehen ist. In dem Ventilgehäuse (70, 170) ist eine weitere Spindel (90, 190) angeordnet, die von einer Spindelbohrung (92, 192) durchsetzt ist. An den freien Enden der Ventilspindeln (85, 90, 185. 190) ist jeweils ein Anschlussadapter (51, 52, 151, 152) für den Anschluss von Leitungen (53, 54, 153, 154) vorgesehen, wobei die Leitung (53, 153) die Spindel (90, 190) mit dem Eintritt eines Servo-Magnetventils (58, 158) und die Leitung (54, 154) die Spindel (85, 185) mit dem Austritt des Servo-Magnetventils (58, 158) verbindet. Der Nottaster (2, 102) korrespondiert mit einer Spindel (40) eines Bypassventils (3) oder einer Spindel (185) des Selbstschlussventils (7).

## Beschreibung

Die Erfindung betrifft eine elektronisch gesteuerte Unterputz-WC-Spülarmatur mit einem Spülergehäuse, einem darin angeordneten hydraulischen Selbstschlussventil und einer Wandabdeckung, in der ein Nottaster angeordnet ist.

Armaturen der eingangs genannten Art sind in vielfältiger Weise bekannt. Üblicher Weise verfügen solche Armaturen über eine Sensorik, die eine berührungslose Bedienung der Armatur ermöglicht. Die WC-Spülung wird dabei entweder durch die Annäherung der Hand an den Sensor oder automatisch mittels einer Raumüberwachung ausgelöst. Als Aktoren für diese elektronisch gesteuerten Armaturen finden einerseits Magnetventile, andererseits Hydraulische Selbstschlussventile in Verbindung mit einem magnetischen Servoventil Anwendung.

Bei der Verwendung von Magnetventilen hat sich als nachteilig herausgestellt, dass diese aufgrund Ihrer Bauweise ein vergleichsweise großes Bauvolumen aufweisen. Zudem weisen die Magnetventile üblicherweise eine mit mechanischen Spülern übereinstimmende Anschlussgeometrie auf. Diese ist jedoch mit vergleichsweise hohen Kosten verbunden. Zwar weisen hydraulische Selbstschlussventile gegenüber Magnetventilen eine geringere Größe auf; der Anschluss eines magnetischen Selbstschlussventils verursacht jedoch einen höheren Montageaufwand. Zudem ist das Selbstschlussventil bei bekannten Armaturen in vertikaler Lage eingebaut, wodurch der Austausch von einzelnen Komponenten des Spülers, also beispielsweise die Demontage des Spülergehäuses, sowie die mechanische Auslösung, die mit Hilfe eines Hebels, Schiebers oder pneumatisch erfolgt mit hohen Kosten verbunden.

Bei elektronisch berührungslos gesteuerten Unterputz-WC-Spülarmaturen kann ergänzend zum Aktor eine manuelle Notauslösung vorgesehen sein, Die im Falle eines Stromausfalls eine Notspülung ermöglicht. Die Notauslösung erfolgt in der Regel durch einen manuellen Taster, der in die Frontplatte integriert ist beziehungsweise diese durchgreift. In Verbindung mit einem Magnetventil wird durch diesen Taster eine Spülung mittels Batterie ermöglicht. Da Batterien bekanntermaßen eine begrenzte Lebensdauer haben, ist die Funktionalität des Nottasters somit von einem zusätzlichen Wartungsaufwand abhängig. Bei hydraulischen Selbstschlussventilen löst der Taster vergleichbar zu den Mechanischen Unterputz-WC-Spülarmaturen mit Hilfe einer mechanischen Einrichtung in Form eines Hebels oder eines Schiebersystems das Selbstschlussventil direkt aus. Zudem sind pneumatische Einrichtungen zur Auslösung des Ventils bekannt. Alle Lösungen gemeinsam ist die aufwändige Montage der einzelnen Komponenten, was zusätzliche Kosten verursacht.

Gegenüber den elektronisch gesteuerten Unterputz-WC-Spülarmaturen haben mechanische Unterputz-WC-Spülarmaturen eine horizontale Einbaulage. Die Auslösung dieser mechanischen Spüler erfolgt direkt über eine in einer Frontplatte angeordnete Drucktaste. Darüber hinaus verfügen die Spüler über eine hydraulische Kartusche, die frontseitig ohne Ausbau des Spülergehäuses montierbar ist.

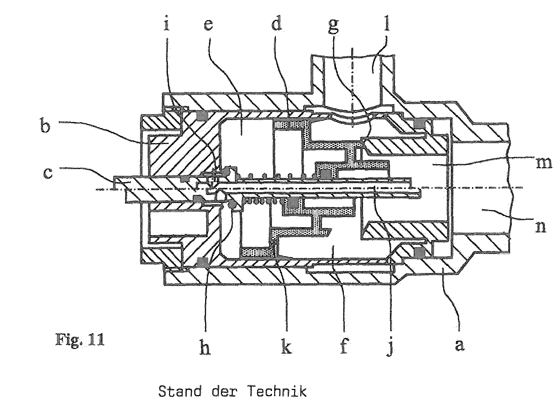

Die Funktionsweise der bekannten Selbstschlusskartuschen für mechanische Spülventile wird nachfolgend anhand der Figur 11, die den Stand der Technik repräsentiert und die eine Kartusche im Schnitt, teilweise in geöffneter, teilweise in geschlossener Position darstellt. In der in der oberen Hälfte dargestellten geschlossenen Position ist die in einem Spülergehäuse a angeordnete Kartusche b im Ruhezustand. Über eine Eintrittsöffnung I steht sowohl Kolbenkammer e als auch Ventilkammer f unter Netzdruck. Die Kammern e und f sind durch einen Kolben d von einander getrennt und über eine Düsenbohrung k miteinander verbunden. Da die druckrelevante Kolbenfläche der Kolbenkammer e größer als die Kolbenfläche der Ventilkammer f ist, ist der Ventilsitz g in dieser Position zwangsläufig geschlossen. Durch Drücken auf das aus der Kartusche herausragende Ende der Ventilspindel c erfolgt eine Öffnung des Servoventils h. In der Kolbenkammer e reduziert sich dadurch der Druck, wobei die Kolbenkammer e über eine Entlastungsbohrung i und eine Spindelbohrung j entleert wird. Das Ende der Spindelbohrung j befindet sich in der dem Ventilsitz g nachgeordneten drucklosen Ventilsitzbohrung m und Austrittsbohrung n. Durch den nach wie vor herrschenden Druck in der Ventilkammer f schwimmt der Kolben d auf und öffnet den Ventilsitz g. Bei nicht mehr gedrückter Ventilspindel c kehrt das Servoventil h in seine geschlossene Position zurück, wodurch die Kolbenkammer e von der unter Druck stehenden Ventilkammer f über die Düsenbohrung k langsam erneut gefüllt wird. Bei vollständig angefüllter Kolbenkammer e ist der Ventilsitz g wieder geschlossen.

Vor dem Hintergrund des dargelegten Standes der Technik liegt der Erfindung die Aufgabe zugrunde, eine elektronisch gesteuerte Unterputz-WC-Spülarmatur mit einem hydraulischen Selbstschlussventil zu schaffen, das eine horizontale Einbaulage aufweist und den Anschluss eines Servo-Magnetventils vorsieht. Zudem ist es Aufgabe der Erfindung einen Nottaster zu schaffen, der zum Auslösen einer Spülung keine zusätzlichen mechanischen oder pneumatischen Einrichtungen erfordert. Gemäß der Erfindung wird diese Aufgabe durch die Merkmale des Patentanspruchs 1 sowie des Patentanspruchs 5 gelöst.

Mit der Erfindung ist eine elektronisch gesteuerte Unterputz-WC-Spülarmatur mit hydraulischem Selbstschlussventil geschaffen, welches eine horizontale Einbaulage ermöglicht. Hierdurch ist der Austausch der Spülerkomponenten einfach und damit preiswert möglich. Außerdem benötigt die erfindungsgemäße Armatur zum Auslösen einer Spülung keine zusätzlichen mechanischen oder pneumatischen Einrichtungen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die perspektivische Darstellung einer Wandabdeckung für eine Unterputz-WC-Spülarmatur;
- Fig. 2: den Schnitt entlang der Linie A-A in Figur 1;
- Fig. 3: den Schnitt durch ein Bypassventil;

- Fig. 4: die Darstellung einer Spindel;
- Fig. 5: den Schnitt durch den in der Armatur vorgesehenen WC-Spüler;
- Fig. 6: die perspektivische Darstellung der Anordnung von Bypassventil, Servo-Magnetventil und Selbstschlussventil;
- Fig. 7: die perspetkivische Darstellung einer Wandabdeckung für eine Unterputz-WC-Spülarmatur in einer anderen Ausgestaltung.
- Fig. 8: den Schnitt entlang der Linie B-B in Figur 7;
- Fig. 9: den Schnitt durch den in der Armatur vorgesehenen WC-Spüler;
- Fig. 10: die perspektivische Darstellung der Anordnung eines Servo-Magnetventils mit einem Selbstschlussventil;
- Fig. 11: den Schnitt durch die Kartusche eines mechanischen Selbstschlussventils nach dem Stand der Technik.

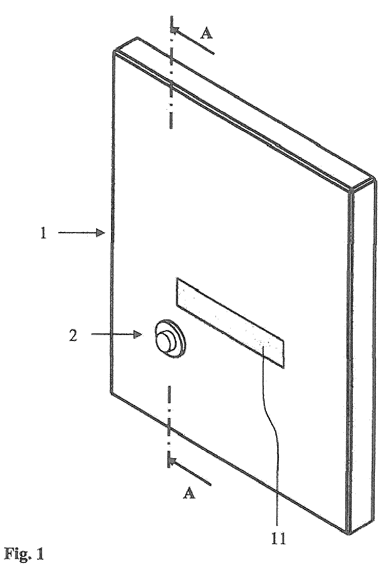

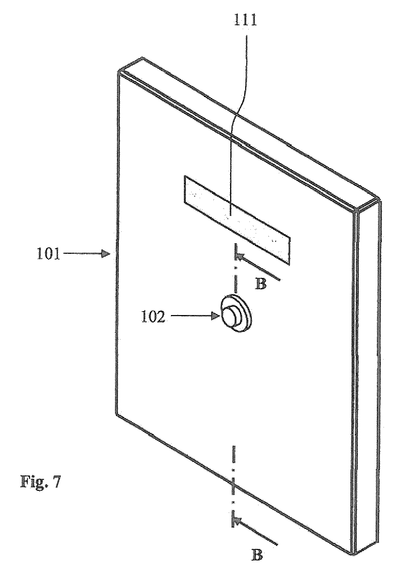

Die als Ausführungsbeispiel gewählte elektronisch gesteuerte Unterputz-WC-Spülarmatur weist eine Wandabdeckung 1,101 auf, in der ein Nottaster 2, 102 angeordnet ist. Der Taster 2 ist im Ausführungsbeispiel nach Figur 1 außermittig angeordnet, wohingegen der Taster 102 im Ausführungsbeispiel nach Figur 7 im Mittelpunkt der Wandabdeckung 101 angeordnet ist. Die Spülarmatur umfasst neben einem Servo-Ventil 58, 158, das mit einem Selbstschlussventil 7 verbunden ist, einen WC-Spüler 6. Im Ausführungsbeispiel nach den Figuren 1 bis 6 umfasst die Spülarmatur zudem ein Bypassventil 3, welches mit dem Servo-Ventil 58 und dem Selbstschlussventil 7 verbunden ist.

Die Wandabdeckung 1,101 besteht aus einer Wandplatte 10, 110, in die ein Sensorfenster 11, 111 angebracht ist. Unter der Wandabdeckung 1,101 ist eine Wandbefestigung 12, 112 vorgesehen, welche ringsum von einer Dichtung 13, 113 umgeben ist. Die Wandbefestigung 12, 112 ist mit Hilfe von Befestigungsschrauben 14 an einem Unterputz-Montagekasten 17, 117 befestigt, hierzu weist der Montagekasten 17, 117 eine Befestigungslasche 18 auf, in der ein Innengewinde 19 vorgesehen ist (Figur 1). Zudem ist im Ausführungsbeispiel nach Figuren 1 an der Wandbefestigung 12 ein Befestigungsbügel 15 vorgesehen, der eine Durchtrittsöffnung 16 für eine Spindel 40 des Bypassventils 3 aufweist.

Der Taster 2, 102 steht in Verbindung mit der Spindel 20, 120, durch die eine Betätigung der Armatur ausgelöst werden kann. Die Spindel 20, 120 ist mit einem Absatz 21, 121 versehen, an der sich eine Druckfeder 23, 123 abstützt. Auf Ihrer dem Absatz 21, 121 abgewandten Seite stützt sich die Feder 23, 123 auf einem Boden 29, 129 ab, der Bestandteil einer Befestigungsmutter 28, 128 ist. Die Befestigungsmutter 28, 128 ist auf einen Gewindeschafft 25, 125 aufgeschraubt, der seinem der Befestigungsmutter 28, 128 abgewandten Seite mit einem Absatz 24, 124 versehen ist, welcher auf der Wandplatte 10, 110 zugewandten Seite eine Auflagefläche 26, 126 ausbildet. Gleichzeitig bildet der Absatz 21, 121 innen eine Anschlagfläche 22, 122 für den Absatz 24, 124 der Spindel 20, 120 und begrenzt gleichzeitig eine Stufenbohrung 27, 127, in welcher die Druckfeder 23, 123 sowie der Absatz 21, 121 bewegbar angeordnet sind.

Im Ausführungsbeispiel nach den Figuren 1 bis 6 ist die Armatur mit einem Bypassventil 3 versehen. Das Bypassventil 3 weist ein Ventilgehäuse 30 auf, welches von einer Gehäusebohrung 31 durchsetzt ist. Die Gehäusebohrung 31 ist mehrfach abgesetzt, wodurch eine Ventilsitzbohrung 32, eine Spindelbohrung 33 sowie eine Stufenbohrung 34 ausgebildet sind. Die Stufenbohrung 34 bildet die Eintrittsseite des Bypassventils 3. Am Übergang zwischen der Gehäusebohrung 31 und der Ventilsitzbohrung 32 ist ein Ventilsitz 36 ausgebildet. An die Stufenbohrung 34 schließt sich ein Gewinde 38 an, welches bereichsweise in die Gehäusebohrung 31 ragt. Rechtwinklig zur Gehäusebohrung 31 ist im Bereich der Ventilsitzbohrung 32 eine Austrittsbohrung 35 vorgesehen, die auf ihrer dem Umfang des Bypassventils 3 zugewandten Seite eine Gewindebohrung 39 aufweist. Darüber hinaus ist das Bypassventil 3 auf seiner der Eintrittsbohrung 34 abgewandten Seite mit einer Gewindebohrung 37 versehen, die zur Befestigung an dem Befestigungsbügel 15 dient und die mit Hilfe einer Befestigungsschraube 50 erfolgt.

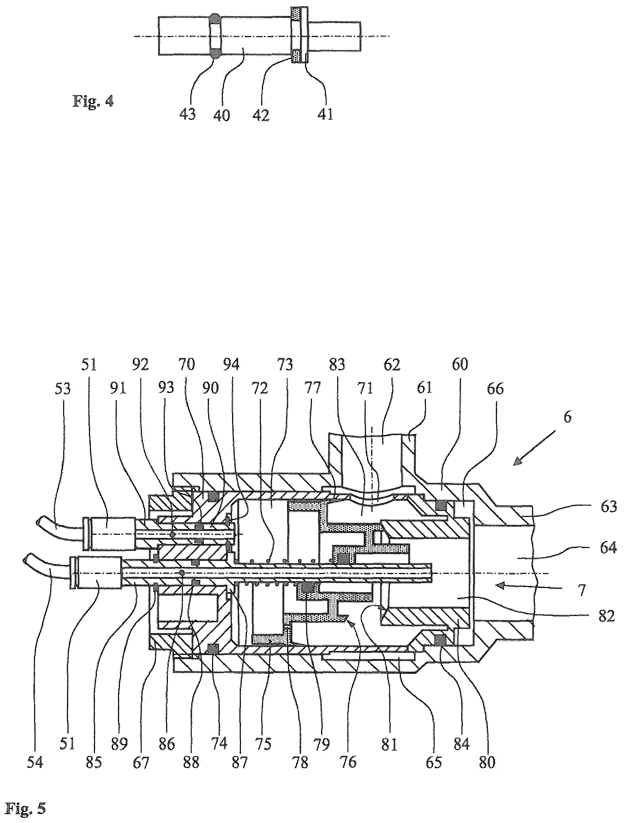

In dem Bypassventil 3 ist im Ausführungsbeispiel nach den Figuren 1 bis 6 eine Spindel 40 geführt (Figur 4). Die Spindel 40 ist mit einem Absatz 41 versehen, an dem eine Ventildichtung 42 anliegt. Zudem ist die Spindel 40 beabstandet zur Ventildichtung 42 mit einem Dichtring 43 ausgestattet. Der Dichtring 43 bewegt sich in montiertem Zustand der Spindel 40 im Bereich der Spindelbohrung 33; die Ventildichtung 42 sowie der Absatz 41 bewegen sich in montiertem Zustand im Bereich der Gehäusebohrung 31 des Bypassventils 3.

Die Spindel 40 ist von einer Druckfeder 44 umgeben, die sich an ihrem einen Ende an den Absatz 41 abstützt. An ihrem anderen Ende stützt sich die Druckfeder 44 an einem Verschlussstopfen 45 ab, in dem eine Aufnahmebohrung 46 für die Spindel 40 ausgebildet ist. Der Verschlussstopfen 45 ist mit einem Außengewinde versehen, welches mit dem Gewinde 38 in dem Bypassventil 3 korrespondiert. Im Anschluss an das Gewinde ist der Verschlussstopfen 45 mit einer Dichtung 49 ausgestattet, die den Verschlussstopfen 45 gegen das Bypassventil 3 abdichtet. Die Dichtung 49 liegt an einem Absatz 48 an, welcher den Anschlag für den Verschlussstopfen 45 bildet. Im Bereich des Absatzes 48 ist der Verschlussstopfen 45 zudem mit einer Eintrittsbohrung 47 versehen.

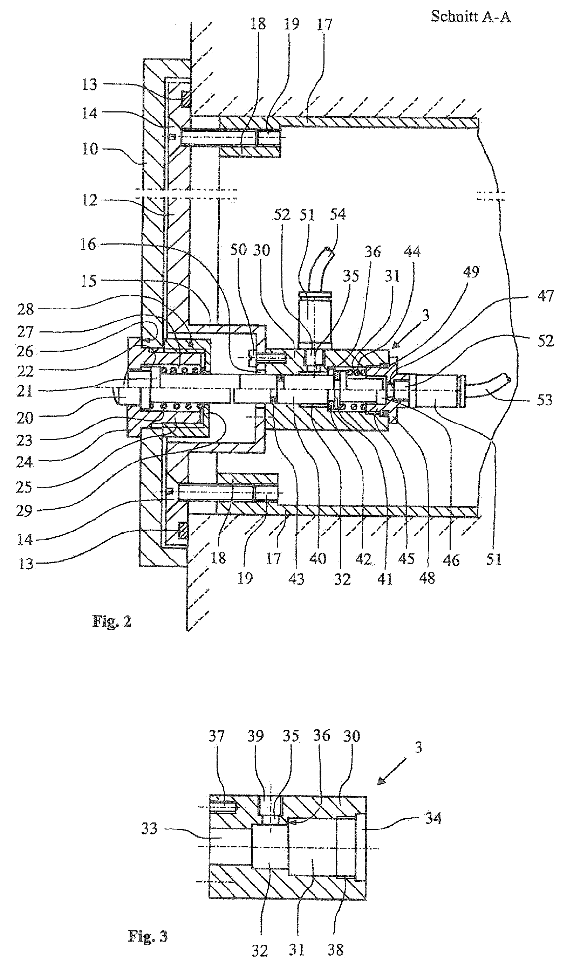

Die Verbindung zwischen Bypassventil 3, Servo-Ventil 58, 158 und Selbstschlussventil 7 erfolgt mittels Schlauchleitungen 53, 54. Die Schlauchleitungen 53, 54 münden jeweils in Anschlussadaptern 51, die jeweils einen Stutzen 52 aufweisen. Die Stutzen 52 sind auf Seiten des Bypassventils 3 in die Bohrung 35 und die Bohrung 47 eingeschraubt (Figur 2).

Der WC-Spüler 6 besteht aus einem Spülergehäuse 60, 160, welches mit einem Eintrittsstutzen 61, 161 und einem Austrittsstutzen 63, 163 versehen ist. Der Eintrittsstutzen 61, 161 weist eine Eintrittsöffnung 62, 162 auf; der Austrittsstutzen 63, 163 weist eine Austrittsöffnung 64, 164 auf. Der WC-Spüler 6 weist innen einen Ringkanal 65, 165 auf, an dem sich auf der Austrittsöffnung 64, 164 zugewandten Seite eine Aufnahmebohrung 66, 166 für das Selbstschlussventil 7 anschließt. Zur Befestigung des Selbstschlussventils 7 ist auf der der Austrittsöffnung 64, 164 abgewandten Seite eine Befestigungsmutter 67, 167 in das Spülergehäuse 60, 160 eingeschraubt.

Das Selbstschlussventil 7 ist als Kartusche ausgebildet. Es besteht aus einem Ventilgehäuse 70, 170, welches mit einer Eintrittsöffnung 71, 171 versehen ist und die in montiertem Zustand mit der Eintrittsöffnung 62, 162 des WC-Spülers 6 korrespondiert. In dem Gehäuse 70, 170 ist eine Kolbenkammer 73, 173 ausgebildet, in der ein Ventilkolben 75, 175 bewegbar angeordnet ist. Der Ventilkolben 75, 175 weist an dem der Austrittsöffnung 64, 164 des WC-Spülers 6 zugewandten Seite eine Dichtlippe 76, 176 auf, die als Ventildichtung fungiert. Zudem weist der Ventilkolben 75, 175, eine Dichtlippe 77, 177 auf, die als Abdichtung für die Kolbenkammer 73, 173 dient. Zwischen der Dichtlippe 77, 177 und der Dichtlippe 76, 176 ist in dem Ventilkolben 75, 175 eine Düsenbohrung 78, 178 angeordnet, die eine Verbindung zwischen Kolbenkammer 73, 173 und einer Ventilkammer 83, 183 darstellt. Innen ist der Ventilkolben 75, 175 mit einem Dichtring 79, 179 versehen, der den Ventilkolben 75, 175 gegen eine Ventilspindel 85, 185 abdichtet, die den Ventilkolben durchsetzt. Die Ventilspindel 85, 185 ist als Hohlspindel ausgebildet.

Auf der der Austrittsöffnung 64, 164 zugewandten Seite bildet das Selbstschlussventil 7 ein Ventilsitzgehäuse 80, 180 aus, welches mit einem Ventilsitz 81, 181 versehen ist. Der Ventilsitz 81, 181 korrespondiert in montiertem Zustand mit der Dichtlippe 76, 176. In dem Ventilsitzgehäuse 80, 180 ist eine Ventilsitzbohrung 82, 182 ausgebildet, in die die Ventilkolben 75, 175 je nach Betriebszustand hineinragen kann. Außen ist das Ventilsitzgehäuse 80, 180 mit Hilfe einer Dichtung 84, 184 gegen das Spülergehäuse 60, 160 abgedichtet.

Auf der der Austrittsöffnung 64, 164 abgewandten Seite ist das Ventilgehäuse 70, 170 von der Ventilspindel 85, 185 durchsetzt. Die Ventilspindel 85, 185 ist mit einer durchgehenden Spindelbohrung 86, 186 versehen und außen mit einem Absatz 87, 187 ausgestattet. Mit Hilfe des Absatzes stützt sich die Ventilspindel 85, 185 gegen das Ventilgehäuse 70, 170 ab. Beabstandet zum Absatz 87, 187 ist zudem außen an der Ventilspindel 85, 185 eine Dichtung 88, 188 versehen, mit der die Spindel gegen das Ventilgehäuse 70, 170 abgedichtet ist. Zur Befestigung der Ventilspindel 85 ist im Ausführungsbeispiel nach Figur 5 außen ein Sicherungsring 89 angeordnet, so dass die Ventilspindel 85 zwischen dem Absatz 87 und dem Sicherungsring 89 an dem Ventilgehäuse 70 unbeweglich befestigt ist.

Zwischen dem Absatz 87, 187 sowie dem Ventilkolben 75, 175 ist die Ventilspindel 85, 185 von einer Druckfeder 72, 172 umgeben, wobei sich die Druckfeder einerseits am Absatz 87, 187, andererseits am Ventilkolben 75, 175 abstützt. An dem freien Ende der Ventilspindel 85 ist im Ausführungsbeispiel nach Figur 5 ein Anschlussadapter 51 vorgesehen, der zum Anschluss der Leitung 54 und damit zur Verbindung mit dem Austritt des Servo-Magnetventils 58 und dem Ausgang aus dem Bypassventil 3 dient, wobei die Aufteilung mittels eines T-Stücks 55 erfolgt. Das T-Stück 55 ist im Ausführungsbeispiel aus Kunststoff hergestellt. Ebenso sind die Leitungen 53, 54 aus Kunststoff hergestellt. Die Verwendung anderer Materialien, insbesondere von Leitungen aus Metall, ist ebenfalls möglich.

Benachbart zur Ventilspindel 85, 185 ist in dem Ventilgehäuse 70, 170 eine Spindel 90, 190 angeordnet, die von einer Spindelbohrung 92, 192 durchsetzt ist. Folglich ist die Spindel 90, 190 ebenfalls als Hohlspindel ausgebildet. An seinem dem Ventilkolben 75, 175 abgewandten Ende weist die Spindel 90, 190 einen Absatz 91, 191 auf, dem sich die Spindel 90, 190 gegen das Ventilgehäuse 70, 170 abstützt. Die Spindel 90, 190 ist zudem von einer Dichtung 93, 193 umgeben, die die Spindel gegen das Ventilgehäuse abdichtet. Weiterhin ist auf der dem Kolben 75, 175 zugewandten Ende außen ein Sicherungsring 94, 194 vorgesehen, sodass die Spindel 90, 190 zwischen dem Absatz 91, 191 und dem Sicherungsring 94, 194 axial nicht verschiebbar gehalten ist.

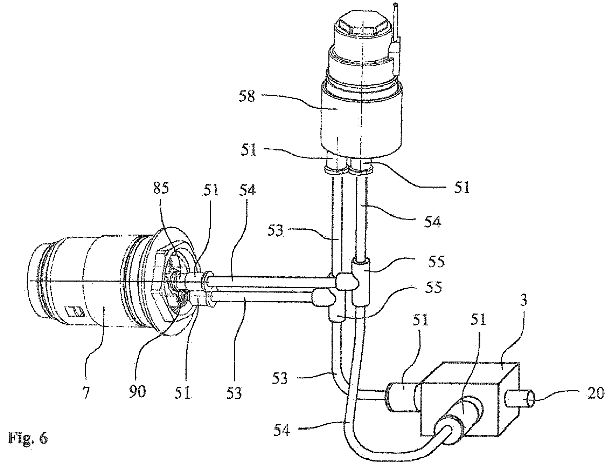

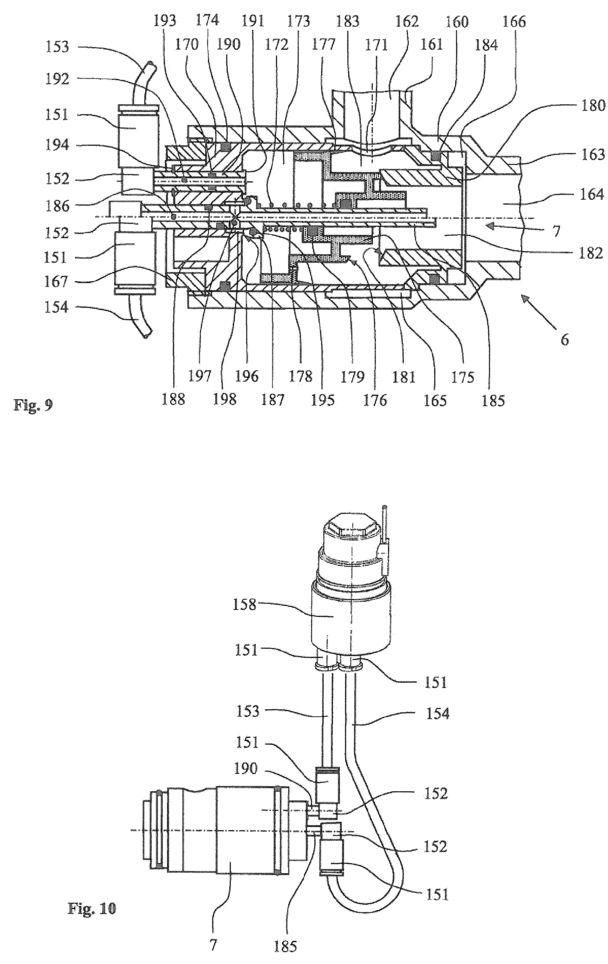

An dem freien Ende der Ventilspindel 90 ist im Ausführungsbeispiel nach Figur 5 ein Anschlussadapter 51 vorgesehen, der zum Anschluss der Leitung 53 und damit zur Verbindung mit dem Eintritt des Servo-Magnetventils 58 und der Eingangsseite des Bypassventils 3 dient, wobei die Aufteilung auch hier mittels eines T-Stücks 55 erfolgt (Figur 6). An dem freien Ende der Ventilspindel 190 ist im Ausführungsbeispiel nach Figur 9 ein Gewindestutzen 152 vorgesehen, der mit einem Anschlussadapter 151 zum Anschluss der Leitung 153 und damit zur Verbindung mit dem Servo-Magnetventil 158 dient. Zur Erleichterung der Montage aber auch der Wartung der erfindungsgemäßen Armatur können die Anschlussadapter 51, 151 als Steckkupplungen und wieder lösbar ausgebildet sein.

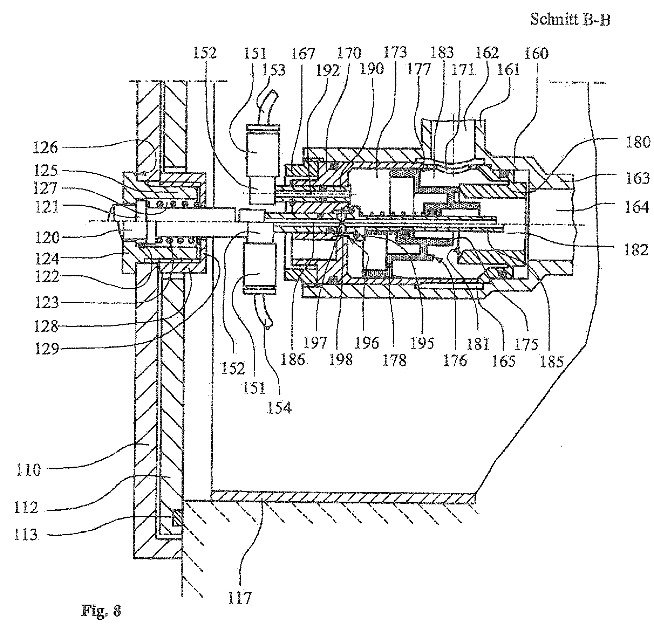

Im Ausführungsbeispiel nach den Figuren 7 bis 10 ist benachbart zum Absatz 187 eine Ventildichtung 195 angeordnet, die mit einem Ventilsitz 196 am Ventilgehäuse 170 korrespondiert. Zudem ist die Spindel 190 mit einer Entlastungsbohrung 197 versehen, die in eine Ventilsitzbohrung 198 im Ventilgehäuse 170 mündet (Figur 9). Dadurch ist Spindelbohrung 186 in geöffnetem Zustand des Ventilkolbens 175 mit der Kolbenkammer 173 verbunden ist.

Erkennbar ist im Ausführungsbeispiel nach den Figuren 1 bis 6 die Ventilspindel 85 axial nicht verschiebbar angeordnet. In Folge dessen ist eine Auslösung der Armatur durch Drücken des Nottasters 2 bei dieser Ausführung nur möglich, da der Nottaster anders als im Ausführungsbeispiel nach den Figuren 7 bis 10 nicht auf die Hohlspindel, sondern auf das Bypassventil 3 wirkt. Im Ausführungsbeispiel nach den Figuren 7 bis 10 bewirkt dagegen eine Betätigung des Nottasters 102 eine axiale Bewegung der Hohlspindel 185, die eine Auslösung der Armatur bewirkt. Die Ausbildung gemäß den Figuren 7 bis 10 macht jedoch eine Anordnung des Nottasters 102 in der Verlängerung der Längsachse der Hohlspindel 185 erforderlich.

## Patentansprüche

1. Elektronisch gesteuerte Unterputz-WC-Spülarmatur mit einem Spülergehäuse (60, 160), einem darin angeordneten hydraulischen Selbstschlussventil (7), das aus einem Ventilgehäuse (70, 170) besteht, und einer Wandabdeckung (1, 101), in der ein Nottaster (2, 102) angeordnet ist, **dadurch gekennzeichnet, dass** der Nottaster (2, 102) mit einer Spindel (40) eines Bypassventils (3) oder einer Spindel (185) des Selbstschlussventils (7) zur Öffnung des eines Bypassventils (3) oder des Selbstschlussventils (7) korrespondiert.

2. WC-Spülarmatur nach Anspruch 1, **dadurch gekennzeichnet, dass** am Eingang und Ausgang des Bypassventils (3) Anschlussadapter (51) für die Leitungen (53, 54) vorgesehen sind.

3. WC-Spülarmatur nach Anspruch 1 oder 2, **dadurch gekennzeichnet, dass** die Verbindung der Leitungen (53, 54) mit Hilfe von T-Stücken (55) gebildet ist.

4. WC-Spülarmatur nach einem der vorgenannten Ansprüche, **dadurch gekennzeichnet, dass** das Bypassventil (3) über seine Eintrittsbohrung (34) mit dem Eintritt des Servo-Magnetventil (58) und der Spindel (90) des Selbstschlussventils (7) verbunden ist.

5. WC-Spülarmatur nach einem der vorgenannten Ansprüche, **dadurch gekennzeichnet, dass** das Bypassventil (3) über seine Austrittsbohrung (35) mit dem Austritt des Servo-Magnetventil (58) und der Spindel (85) des Selbstschlussventils (7) verbunden ist.

6. WC-Spülarmatur nach Anspruch 1, **dadurch gekennzeichnet, dass** das Selbstschlussventil (7) eine Ventilspindel (185) aufweist, die mit einer durchgehenden Spindelbohrung (186) versehen ist, welche über eine Entlastungsbohrung (197) und eine Ventilsitzbohrung (198) in geöffnetem Zustand mit einer Kolbenkammer (173) verbunden ist.
